# FASCICULE DE BREVET EUROPEEN

(11) **EP 3 012 886 B1**
(45) Date de publication et mention de la délivrance du brevet: **29.03.2017**
(21) Numéro de dépôt: 15191107.0
(22) Date de dépôt: 22.10.2015
(51) Int. Cl.: H01M 4/04, G02F 1/15, H01M 10/052, H01M 10/0585, H01M 6/40, H01M 10/0562, H01M 4/38

(54) **DISPOSITIF ÉLECTROCHIMIQUE, TEL QU'UNE MICROBATTERIE OU UN SYSTÈME ÉLECTROCHROME, ET SON PROCÉDÉ DE RÉALISATION**
ELEKTROCHEMISCHE VORRICHTUNG, WIE EINE MIKROBATTERIE ODER EIN ELEKTROCHROMES SYSTEM, UND IHR HERSTELLUNGSVERFAHREN
ELECTROCHEMICAL DEVICE, SUCH AS A MICROBATTERY OR AN ELECTROCHROMIC SYSTEM, AND METHOD FOR MANUFACTURING SAME

(30) Priorité: 22.10.2014 FR 1460154
(43) Date de publication de la demande: 27.04.2016
(73) Titulaire: Commissariat à l'Energie Atomique et aux Energies Alternatives, 75015 Paris (FR)
(72) Inventeur: OUKASSI, Sami, 38120 Saint-Egrève (FR); MARTIN, Steve, 38160 Saint-Sauveur (FR)
(74) Mandataire: Talbot, Alexandre

(56) Documents cités:
- EP-A1- 2 432 065
- FR-A1- 2 874 128
- US-A1- 2013 280 581
- US-B1- 8 815 450

## Description

### Domaine technique de l'invention

L'invention est relative à un dispositif électrochimique, tel qu'une microbatterie ou un système électrochrome, et à son procédé de réalisation.

### État de la technique

Les microbatteries sont définies comme étant des générateurs électrochimiques tout solide formés par un empilement actif de couches minces qui constituent les électrodes (positive et négative) séparées par un électrolyte.

L'électrode positive est formée dans un matériau ayant une bonne conductivité ionique, par exemple l'oxysulfure de titane (TiOS) ou un oxyde de métal lithié, comme LiCoO₂, LiNiO₂, LiMn₂O₄.

L'électrolyte est un isolant électrique ayant une forte conductivité ionique tel que l'oxynitrure de lithium et de phosphore (LiPON), le LiSON, le LiBON, le Li₂SO₄, le LiNbO₃...

L'électrode négative est constituée de lithium métallique ou d'un matériau lithié. Les batteries comprennent en outre des collecteurs de courant métalliques, par exemple, en platine ou tungstène.

Toutes les couches de la microbatterie sont sous la forme de films minces obtenus par PVD (« Physical Vapor Déposition ») ou CVD (« Chemical Vapor Déposition »). L'épaisseur totale de l'empilement avec les couches d'encapsulation est de l'ordre de 15*µ*m.

Le principe de fonctionnement repose sur l'insertion-désinsertion (ou intercalation-désintercalation) de cations, généralement Li⁺, dans la structure hôte (matériau d'intercalation, ou de conversion, alliage, etc).

Les performances de la stabilité en cyclage d'une microbatterie nécessitent une excellente réversibilité de l'insertion ionique X⁺. Ces performances dépendent de plusieurs paramètres :
- la sélection des matériaux hôtes (nature des électrodes positive et négative) et de l'électrolyte,
- l'équilibre électrochimique (capacités, dopages et épaisseurs des électrodes),
- l'architecture de la microbatterie (positionnement et recouvrement des électrodes) et le rapport entre la surface de l'électrode positive et la surface de l'électrode négative.

Trois principales configurations d'architecture de microbatteries sont décrites dans l'art antérieur.

Dans la première configuration, une des surfaces (aires) des électrodes est supérieure à l'autre.
L'article de Son et al. (Journal of Power Sources 243 (2013) 641-647) recommande d'utiliser, dans une batterie Li-ion, une anode ayant une surface supérieure ou égale à celle de la cathode pour augmenter la durée de vie de la batterie.
Une telle configuration est, également, décrite dans le document EP 2 192 638 ou encore dans le document US 6,818,356 qui montre un substrat 44 recouvert successivement par une cathode 50, une couche d'électrolyte 42 et une anode 52. La couche d'électrolyte 42 recouvre les parois latérales et la face supérieure de la cathode 50. L'anode 52 est déposée au-dessus de la couche d'électrolyte 42. L'anode 52 recouvre partiellement la couche d'électrolyte 42. Chaque électrode 50, 52 est reliée à un collecteur de courant 46, 48.

L'anode est positionnée au-dessus de l'architecture de la microbatterie et présente une surface plus grande que la surface de la cathode.

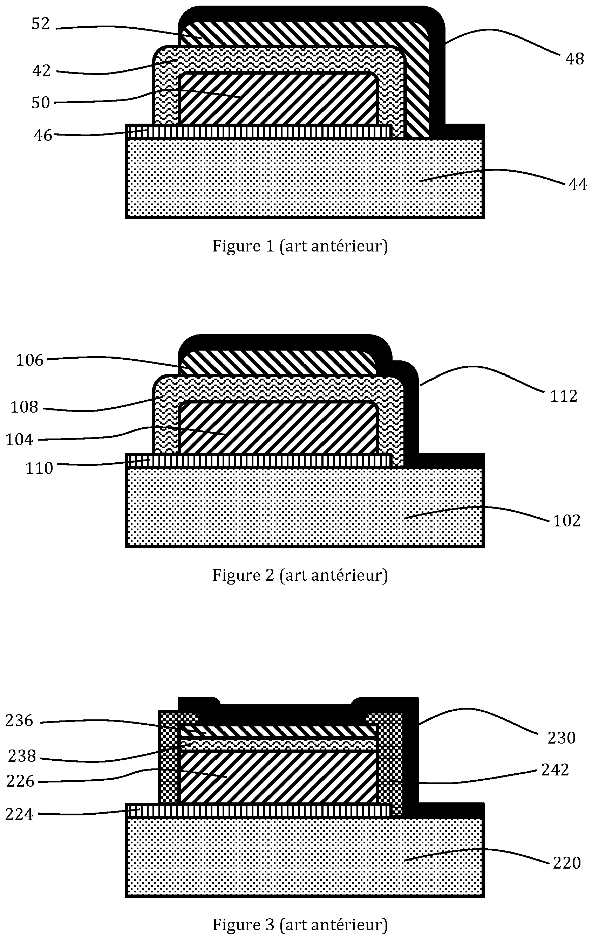

La figure 1 représente schématiquement une telle configuration.

Le document US 2014/0106203, décrit également une batterie au lithium présentant une telle architecture. Pour améliorer les performances de la batterie, ce document recommande, en plus, que l'anode ne recouvre pas totalement la cathode, ceci permet de réduire, voire d'éliminer les court-circuits entre l'anode et la cathode, et d'améliorer la capacité de charge de la batterie. La longueur du non-recouvrement est d'au moins 10*µ*m. Une telle configuration est simple à mettre en oeuvre.

Dans une deuxième configuration, et comme représenté schématiquement à la figure 2, les surfaces des électrodes 104, 106 sont identiques et les surfaces sont en vis-à-vis, disposées parallèlement au substrat 102. Chaque électrode 104, 106 est reliée à un collecteur de courant 110, 112. Les flancs de la couche d'électrolyte 108 ne sont pas recouverts par les électrodes 104, 106. Une portion du collecteur de courant 112 de l'électrode, disposée au sommet de l'empilement, recouvre le flanc de l'électrolyte. Le document US 2010/0330411 décrit cette architecture. Cependant, une telle architecture ne présente pas une durée de vie satisfaisante.

Dans une troisième configuration, représentée schématiquement à la figure 3, l'empilement déposé sur le substrat 220 comporte deux électrodes 226, 236 reliées à des collecteurs de courant 224, 230 ; la surface des électrodes est identique et un matériau diélectrique 242 est disposé au niveau des flancs de la batterie pour isoler l'électrolyte 238 du collecteur de courant 230 de l'électrode disposée au-dessus de l'électrolyte. Le document US8420252 décrit une structure de microbatterie selon cette configuration.

Cependant, une telle configuration est plus complexe à mettre en oeuvre et la durée de vie de ces dispositifs n'est pas non plus satisfaisante.

Cette problématique est également retrouvée dans les systèmes électrochromes. Les dispositifs électrochromes, ou électrochromiques, sont des dispositifs qui se colorent sous l'action d'un champ électrique.
Les dispositifs présentent une architecture similaire aux microbatteries : ils comportent une électrode active et une contre-électrode séparées par un électrolyte. L'électrode active est classiquement composée d'un matériau électrochromique en mesure d'insérer, réversiblement et simultanément, des ions et des électrons.
L'insertion des ions doit être réversible afin d'obtenir des dispositifs présentant une bonne stabilité en cyclage.

Le document FR2874128 divulgue une microbatterie comprenant un empilement de couches minces solides sur un substrat en silicium 1 comprenant successivement un premier collecteur de courant 5 recouvrant une partie du substrat, une cathode 8 ayant une face inférieure, une face supérieure et des parois latérales, la face inférieure recouvrant le collecteur de courant 5, une couche d'électrolyte 7 recouvrant la face supérieure et les parois latérales de la cathode 8 de manière symétrique, une anode 6 recouvrant totalement la couche d'électrolyte 7, un second collecteur de courant 4 connecté à l'anode 6 et recouvrant une partie du substrat 1, le second collecteur de courant 4 et l'anode 6 étant isolés électriquement du premier collecteur de courant 5 et de la cathode 8, ledit dispositif comportant des premiers et des seconds moyens de connexions électriques comportant des vias conducteurs 10 reliés respectivement au premier collecteur de courant 5 et au second collecteur de courant 4, et isolés entre eux.

### Objet de l'invention

L'invention a pour but de remédier aux inconvénients de l'art antérieur et, en particulier, de proposer un dispositif électrochimique présentant une bonne stabilité en cyclage.

Cet objet est atteint par un dispositif électrochimique, tel qu'une microbatterie ou un système électrochrome, comportant un empilement de couches minces solides formées sur un substrat, ledit empilement comprenant successivement :
- un premier collecteur de courant recouvrant une partie du substrat,
- une première électrode définissant un motif ayant une face inférieure, une face supérieure et des parois latérales, la face inférieure du motif recouvrant au moins une partie du premier collecteur de courant,
- une couche d'électrolyte configurée pour recouvrir au moins la face supérieure et au moins une partie des parois latérales du motif de la première électrode,
- une seconde électrode recouvrant totalement la couche d'électrolyte, l'épaisseur de la couche d'électrolyte disposée entre les parois du motif de la première électrode et la seconde électrode étant sensiblement égale autour dudit motif à 20% près,
- un second collecteur de courant recouvrant totalement la seconde électrode, le second collecteur de courant et la seconde électrode étant isolés électriquement du premier collecteur de courant et de la première électrode,
ledit dispositif comportant des premiers et des seconds moyens de connexions électriques reliés respectivement au premier et au second collecteurs de courant et isolés entre eux.

Cet objet est également atteint par un procédé de réalisation d'un dispositif électrochimique comportant les étapes successives suivantes :
- fournir un substrat recouvert par un premier collecteur de courant,
- former une première électrode sur le premier collecteur de courant, la première électrode définissant un motif ayant une face inférieure, une face supérieure et des parois latérales, la face inférieure du motif recouvrant au moins une partie du premier collecteur de courant,
- former une couche d'électrolyte sur la première électrode, la couche d'électrolyte étant configurée pour recouvrir au moins la face supérieure et au moins une partie des parois latérales du motif de la première électrode,
- former une seconde électrode recouvrant totalement la couche d'électrolyte, l'épaisseur de la couche d'électrolyte disposée entre les parois du motif de la première électrode et la seconde électrode étant sensiblement égale autour dudit motif à 20% près,
- former un deuxième collecteur de courant recouvrant totalement la seconde électrode, le second collecteur de courant et la seconde électrode étant isolés électriquement du premier collecteur de courant et de la première électrode,
- former des premiers et des seconds moyens de connexions électriques, reliés respectivement au premier et au second collecteurs de courant et isolés entre eux.

### Description sommaire des dessins

D'autres avantages et caractéristiques ressortiront plus clairement de la description qui va suivre de modes particuliers de réalisation de l'invention donnés à titre d'exemples, non limitatifs, et représentés aux dessins annexés, dans lesquels :
- les figures 1 à 3 représentent, de manière schématique, en coupe, un dispositif électrochimique selon l'art antérieur,
- la figure 4 et les figures 7 à 9 représentent, de manière schématique et en coupe, un dispositif électrochimique selon différents modes de réalisation de l'invention,
- les figures 5 et 6 représentent schématiquement, en vue de dessus, deux électrodes et une couche d'électrolyte selon différents modes de réalisation de l'invention.

### Description d'un mode de réalisation préférentiel de l'invention

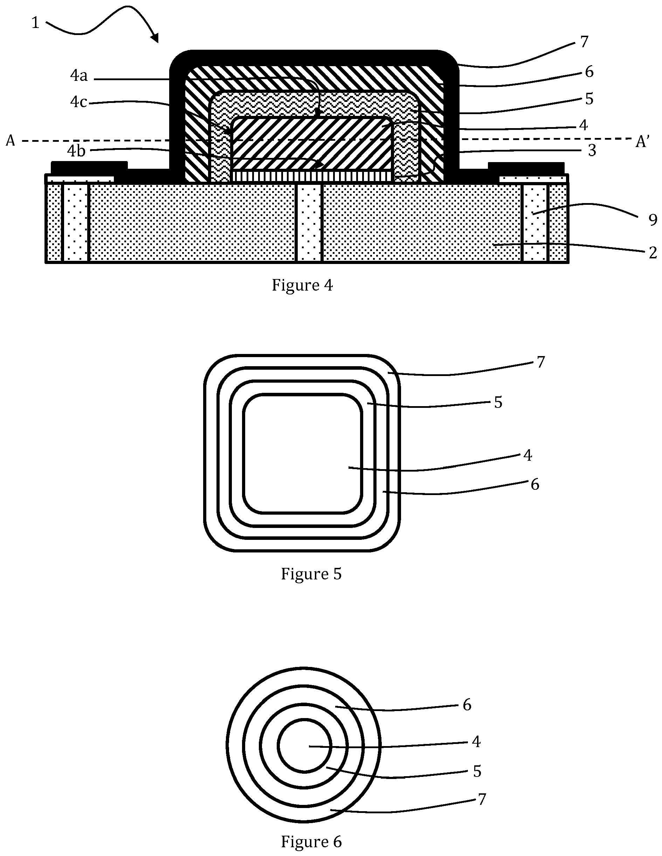

Comme illustré à la figure 4, le dispositif électrochimique 1, tel qu'une microbatterie ou un système électrochrome, comporte un empilement de couches minces solides formées sur un substrat 2. Dans un mode de réalisation particulièrement avantageux, le substrat est électriquement isolant ou comporte en surface une couche électriquement isolante.

Le substrat 2 est muni d'une première face et d'une seconde face. L'empilement est déposé sur la première face du substrat 2, c'est-à-dire sur la couche électriquement isolante.

L'empilement comprend successivement :
- un premier collecteur de courant 3, recouvrant une partie du substrat 2,
- une première électrode 4 définissant un motif ayant une face inférieure, une face supérieure et des parois latérales, la face inférieure du motif recouvrant au moins une partie du premier collecteur de courant 3,
- une couche d'électrolyte 5 configurée pour recouvrir au moins la face supérieure et au moins une partie des parois latérales du motif de la première électrode 4,
- une seconde électrode 6 recouvrant totalement la couche d'électrolyte 5,
- un second collecteur de courant 7 recouvrant au moins partiellement la seconde électrode 6.

Par au moins une partie, on entend que la couche d'électrolyte recouvre au moins une partie de chacune des parois latérales du motif de la première électrode 4.
Dans un mode de réalisation particulier, la couche d'électrolyte 5 recouvre complètement les parois latérales du motif de la première électrode 4.

Selon un mode de réalisation particulier, l'épaisseur de la couche d'électrolyte 5 disposée entre les parois latérales du motif de la première électrode 4 et la seconde électrode 6 est sensiblement égale autour dudit motif à 20% près. L'épaisseur de la couche d'électrolyte 5 ne varie pas de plus de 20% tout autour du motif.
Par tout autour du motif, on entend autour des parois latérales du motif : la couche d'électrolyte ne varie pas de plus de 20% entre les parois latérales du motif de la première électrode et la seconde électrode 6.
L'épaisseur de la couche d'électrolyte 5 correspond à la distance minimale entre les première et seconde électrodes 4 et 6, soit entre les deux faces opposées de l'électrolyte.
Avantageusement, l'épaisseur de la couche d'électrolyte 5 ne varie pas de plus de 20% à la fois entre les parois latérales du motif de la première électrode et la seconde électrode 6 mais aussi entre la face supérieure du motif et la seconde électrode 6. Par exemple, l'épaisseur de la couche d'électrolyte 5 au niveau des parois latérales du motif de la première électrode ne varie pas de plus de 20% par rapport à l'épaisseur de la couche d'électrolyte au niveau de la face supérieure dudit motif.

Cette distance sensiblement constante entre la première électrode 4 et la seconde électrode 6 permet d'avoir une uniformité de comportement électrochimique : les épaisseurs de la face supérieure et des faces latérales de la couche d'électrolyte 5, étant sensiblement les mêmes, la diffusion se fait de manière uniforme.
Préférentiellement, l'épaisseur de la couche d'électrolyte 5 ne varie pas de plus de 10%.

La couverture des parois du premier motif, par la couche d'électrolyte 5, est, avantageusement, symétrique tout autour du motif. Les flux électrochimiques sont, avantageusement, répartis de façon homogène tout autour du motif.
Par symétrique tout autour du motif, on entend que l'épaisseur de la couche d'électrolyte 5, mesurée dans un plan parallèle à la première face du substrat 2, est sensiblement égale en tout point.

Préférentiellement, la couche d'électrolyte 5 et le premier collecteur de courant 3 encapsulent totalement le motif de la première électrode 4 : la face supérieure 4a et les faces latérales 4c de la première électrode 4 sont totalement recouvertes par la couche d'électrolyte 5 et il y a contact entre la couche d'électrolyte 5 et la première électrode 4. Par il y a contact, on entend qu'il n'y a pas de couche intermédiaire entre la couche d'électrolyte et la première électrode. Préférentiellement, le contact est continu entre les couches.
La couche d'électrolyte 5 recouvre non seulement la face supérieure 4a mais aussi toutes les faces latérales 4c de la première électrode. Si le motif défini par la première électrode présente quatre faces latérales, les quatre faces latérales sont recouvertes et en contact avec la couche d'électrolyte 5.

La face inférieure 4b de la première électrode est en contact avec le premier collecteur de courant 3. Elle n'est pas en contact avec la couche d'électrolyte 5. Par face inférieure ou interne, on entend la face de la couche qui est disposée vers le bas de l'empilement, c'est-à-dire vers le substrat. La face supérieure ou externe correspond à la face opposée.

Cette configuration est particulièrement avantageuse car toute la surface externe de la couche d'électrolyte 5 est en contact avec la deuxième électrode et toute la surface externe de la première électrode 4 est en contact avec l'électrolyte. En comparaison des configurations antérieures, toutes les surfaces disponibles participent aux échanges électrochimiques.

Par exemple, dans les configurations de l'art antérieur où une zone de non recouvrement de l'électrolyte existe, au niveau de cette zone de non-recouvrement, il n'y a pas de circulation d'ions. La zone de non recouvrement peut être le lieu d'insertions irréversibles, dans le cas où les ions arrivent à s'insérer à proximité de la limite de la zone de recouvrement mais continuent à diffuser dans l'électrode, et s'éloignent de cette zone pour finalement ne plus être possible à dé-insérer. Les performances électrochimiques sont alors diminuées.
Cette absence de circulation des ions peut entraîner une non-uniformité de comportement et la formation de contraintes mécaniques entre les zones recouvertes et les zones non recouvertes de la cathode. Les contraintes mécaniques créées peuvent induire une dégradation morphologique (perte d'adhérence, rupture de contact électronique, ou délamination de l'empilement complet) qui peut se transformer en une dégradation électrique au fur et à mesure du cyclage.

Il a été découvert que dans les configurations où le second collecteur de courant est directement en contact avec l'électrolyte, une batterie électrode/électrolyte/collecteur de courant (communément appelée Li-free) est formée et vient perturber le fonctionnement de la batterie principale électrode/électrolyte/électrode lors du cyclage. Ce fonctionnement parasite est préjudiciable au bon fonctionnement de la batterie.

Il a été également découvert que le dépôt d'une couche diélectrique disposée en contact avec l'électrolyte et le collecteur de courant et entre ces deux éléments peut dégrader les interfaces entre les différentes couches minces de l'empilement et les matériaux de la batterie.
De plus, la présence d'une couche de diélectrique dans ce type d'architecture annule tout échange d'ions au niveau des flancs de la structure, d'où une perte de surface active de la batterie. Le dépôt de la couche diélectrique sur le flanc peut dégrader les interfaces/matériaux de la batterie et diminuer la durée de vie des dispositifs.

En revanche, dans les modes de réalisation illustrés aux figures 4, 7 et 8, comme toute la surface externe de la première électrode 4 est recouverte par l'électrolyte, le flux ionique et le potentiel sont plus homogènes en tout point de la surface de la première électrode 4. L'uniformité des échanges ioniques permet de limiter les contraintes mécaniques et/ou permet de solliciter de façon plus uniforme la structure hôte de la première électrode 4 et de la seconde électrode 6, ce qui a pour conséquence de minimiser les variations localisées des propriétés mécaniques, chimiques, et électrochimiques (respectivement, par exemple, délamination, surlithiation irréversible, surtension). Le dispositif présente une bonne stabilité en cyclage. Il est observé que la durée de vie d'un tel dispositif est augmentée.

De plus, comme les parois latérales ou flancs de la première électrode 4 participent également aux réactions électrochimiques, les capacités du dispositif sont améliorées. Il est alors possible de réaliser un dispositif plus compact et plus performant.

La couche d'électrolyte 5 est en contact avec le premier collecteur de courant 3 et est configurée pour isoler électriquement ledit premier collecteur de courant 3 de la seconde électrode 6.

Avantageusement, la couche d'électrolyte 5 recouvre complètement la première électrode 4 et le premier collecteur de courant 3 pour venir en contact avec le substrat. Le pourtour de la couche d'électrolyte 5 est en contact continu avec le substrat 2. Par contact continu, on entend que le pourtour de la couche d'électrolyte 5 est continuellement en contact avec le substrat 2 : il n'y a pas d'élément séparant le substrat et le pourtour de la couche d'électrolyte.
La connexion continue de l'électrolyte 5 avec le substrat permet d'encapsuler complètement le premier collecteur de courant et la première électrode 4 entre le substrat 2 et l'électrolyte 5, et de les isoler du milieu extérieur.

Une structure semblable est présente avec la seconde électrode 6 qui recouvre totalement la surface externe de l'électrolyte 5, i.e. les parois latérales et la face supérieure de la couche d'électrolyte 5 et il y a contact entre la seconde électrode 6 et l'électrolyte 5.
Le pourtour de la seconde électrode 6 est en contact continu avec le substrat 2, encapsulant, isolant, et protégeant du milieu extérieur l'électrolyte 5 et la première électrode 6.

Avantageusement, une couverture de la seconde électrode 6 à plus de 90% permet de mieux répartir et collecter les charges électriques. Préférentiellement, une couverture complète (100%) de la seconde électrode 6 permet en plus de la protéger de l'environnement extérieur. La couverture totale par la seconde électrode 6 permet une meilleure uniformité du flux ionique pendant le cyclage de la batterie. Les performances électriques sont améliorées, les risques de défaillance mécanique sont réduits car il n'y a plus de différence de comportement entre les zones recouvertes et les zones découvertes.

A titre de comparaison, la configuration présentée à la figure 1 ne permet pas d'assurer l'uniformité du flux ionique. Il existe alors une accumulation des ions de manière localisée ce qui entraine la création de contraintes mécaniques. La réversibilité d'une telle architecture est dégradée.

La configuration présentée à la figure 2 ne permet pas d'assurer l'uniformité du flux ionique. Par ailleurs, cette architecture présente également une non-uniformité de potentiel. Il existe alors une accumulation des ions de manière localisée ce qui entraine la création de contraintes mécaniques. La réversibilité d'une telle architecture est dégradée.

La configuration présentée à la figure 3 permet une meilleure uniformité du flux ionique que pour les deux architectures précédentes. Cependant, cette architecture n'est pas très efficace car une partie importante de la surface est perdue et principalement au niveau des flancs.

La seconde électrode 6 est séparée électriquement de la première électrode 4 par la couche d'électrolyte 5, ce qui évite les courts-circuits.

La première électrode 4 présente une face inférieure qui recouvre au moins partiellement le premier collecteur de courant 3 ce qui permet de réaliser différentes configurations.

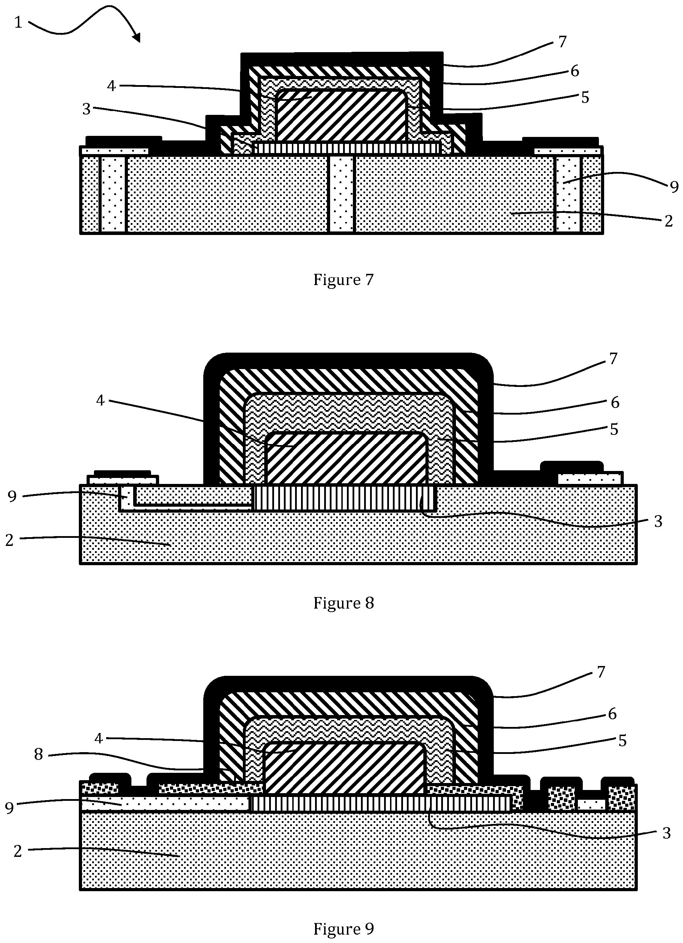

Dans un mode de réalisation illustré à la figure 7, la première électrode 4 présente une face inférieure qui recouvre partiellement le premier collecteur de courant 3. Avantageusement, le motif formé par la première électrode 4 définit un anneau de garde périphérique continu tout autour de la première électrode 4 sur la face supérieure du premier collecteur de courant 3. Dans ce mode de réalisation, la couche d'électrolyte 5 recouvre intégralement la face supérieure de la première électrode 4, les faces latérales de la première électrode 4, les faces latérales du premier collecteur de courant 3 et l'anneau de garde périphérique. La couche d'électrolyte 5 est en contact avec la première électrode 4 et le premier collecteur de courant 3. La couche d'électrolyte 5 encapsule totalement la première électrode 4 en prenant appui sur le premier collecteur de courant 3.
Dans ce cas de figure, la première électrode 4 n'est pas en contact avec le substrat 2.
De manière avantageuse, l'anneau de garde présente une largeur constante matérialisée par une distance constante entre la face latérale de la première électrode 4 et la face latérale du premier collecteur de courant 3.

En variante, la couverture de la face supérieure du premier collecteur de courant 3 par la première électrode peut être partielle mais sans définition d'un anneau de garde périphérique continu, c'est-à-dire que le premier collecteur 3 possède au moins une face latérale dans le prolongement d'une face latérale de la première électrode 4 et/ou que la première électrode 4 déborde au delà du motif formé par le premier collecteur de courant 3.

Dans un autre mode de réalisation comme représenté à la figure 4, la couverture de la face supérieure du premier collecteur de courant 3 par la première électrode 4 est complète mais sans que la première électrode 4 déborde au-delà du premier collecteur de courant 3. En d'autres termes, les parois latérales du premier collecteur de courant 3 sont chacune dans le prolongement des parois latérales de la première électrode 4. Cette configuration permet d'utiliser au maximum les surfaces du substrat.
Dans ce cas de figure, il y a une interface entre l'électrolyte 5 et le premier collecteur de courant 3 uniquement sur les faces latérales du premier collecteur de courant 3.

Dans une autre variante de réalisation non représentée, la couverture de la face supérieure du premier collecteur de courant 3 par la première électrode 4 est complète et la première électrode 4 déborde au delà du motif formé par le premier collecteur de courant 3 sans pour autant former une protection tout autour du premier collecteur de courant 3. Dans ce cas de figure, il y a une interface entre l'électrolyte 5 et le premier collecteur de courant 3.

Dans encore un autre mode de réalisation non représenté, la couverture de la face supérieure du premier collecteur de courant 3 par la première électrode 4 est complète et la première électrode 4 déborde au delà du premier collecteur de courant 3 de manière éviter tout contact entre le premier collecteur de courant 3 et l'électrolyte 5. Le premier collecteur de courant 3 est séparé de l'électrolyte 5 par la première électrode 4.

Dans une autre variante de réalisation illustrée à la figure 8, le premier collecteur de courant 3 est enterré dans le substrat et de préférence dans la couche électriquement isolante de sorte qu'au moins une partie des faces latérales du premier collecteur de courant 3 est recouvert par la couche électriquement isolante. Comme dans les modes de réalisation précédents, la couche d'électrolyte 5 est déposée de manière à recouvrir complètement la première électrode 4 et ce qui est laissé découvert du premier collecteur de courant 3, par exemple l'anneau de garde. Avantageusement, la couche d'électrolyte 5 vient également déborder sur le substrat pour assurer l'isolation électrique entre les première et deuxième électrodes.
Avantageusement, les contacts sont enterrés dans le substrat et protégés pendant les étapes du procédé de réalisation. Ils sont, par exemple, protégés d'une éventuelle oxydation lors d'un traitement thermique ou chimique.

Le motif défini par la première électrode 4 peut être de forme quelconque, par exemple un cylindre, un cube ou un pavé. Avantageusement, et comme représenté aux figures 5 et 6, la première électrode 4, la couche d'électrolyte 5 et la seconde électrode 6 présentent une même forme en vue de dessus. La vue de dessus est obtenue selon l'axe AA' de la figure 4.

De manière avantageuse, la forme initiale de la première électrode 4 est conservée lors du dépôt de la couche d'électrolyte 5 et préférentiellement lors du dépôt de la seconde électrode 6. Cette conservation de la forme initiale permet de limiter les écarts d'épaisseurs entre les faces ce qui facilite la conservation de flux de courants et/ou de flux ioniques homogènes.

Au moyen d'un dépôt conforme, l'épaisseur déposée de couche d'électrolyte est identique sur les faces horizontales et verticales. L'épaisseur déposée est donc la même en tout point. Au moyen du dépôt conforme de l'électrolyte, la distance minimale séparant la face interne de la seconde électrode 6 et la face externe de la première électrode 4 est égale à une première distance, en tout point de la face externe de la première électrode ce qui facilite l'obtention d'un flux ionique homogène dans l'électrolyte.

Dans un mode de réalisation particulièrement avantageux, la couche d'électrolyte et/ou la deuxième électrode sont déposées de manière conforme de sorte que les épaisseurs de matériau déposées sur la face supérieure et sur les faces latérales soient égales (figure 7). Par épaisseurs égales, on entend que les différences d'épaisseurs sont inférieures ou égales à 5% de l'épaisseur totale déposée.

Un dépôt conforme de la couche d'électrolyte permet une très bonne homogénéisation des flux ioniques. Un dépôt conforme de la seconde électrode permet de faciliter une bonne répartition des potentiels sur toute l'interface entre la couche d'électrolyte et la seconde électrode.

Par exemple, si la première électrode 4 présente un motif en forme de pavé, la couche d'électrolyte 5 présentera également une forme de pavé, la pavé étant pourvu d'un trou non traversant de la forme et de la taille de la première électrode, de façon à ce que la première électrode 4 soit imbriquée dans la couche d'électrolyte 5. La surface externe de la première électrode 4 est en contact avec la surface interne de la couche d'électrolyte 5.

En variante illustrée à la figure 4, il peut être intéressant de déposer la couche d'électrolyte 5 de manière non conforme et/ou de structurer la couche d'électrolyte 5 de manière à gommer le relief formé par l'anneau de garde périphérique.

Les vues de dessus représentées aux figures 5 et 6 peuvent représenter des dispositifs illustrés dans les figures 4, 7 et 8 en vue de coupe.

Dans ces cas de figure, si la première électrode 4 est formée sur le substrat sous la forme d'un pavé, la couche d'électrolyte 5 est également formée de manière à ce que l'ensemble formé par la première électrode et la couche d'électrolyte 4 soit toujours sous la forme d'un pavé et que les faces latérales de la première électrode 4 soient parallèles aux faces latérales en vis-à-vis de la couche d'électrolyte 5. Il en va avantageusement de même pour le dépôt de la deuxième électrode 6 ainsi que du deuxième collecteur de courant 7.

La forme initiale, ici un pavé, peut grandir de manière homothétique au fur et à mesure des dépôts réalisés, par exemple la couche d'électrolyte 5, la seconde électrode 6 puis le deuxième collecteur de courant 7.

Les épaisseurs de la couche d'électrolyte 5 et de la seconde électrode 6 peuvent être totalement indépendantes l'une de l'autre.
Dans un mode de réalisation avantageux, les dépôts de la couche d'électrolyte 5 et de la seconde électrode 6 sont réalisés de manière conforme, de sorte à avoir une épaisseur identique en tout point de l'électrolyte. Les parois latérales de la première d'électrode 4c, la surface externe de la couche d'électrolyte 5 et la surface externe de la seconde électrode 6 sont régulièrement espacées. Ceci permet d'obtenir une conductivité ionique uniforme au niveau de l'électrolyte, ainsi qu'une cinétique de diffusion et un état d'insertion uniformes au niveau de la seconde électrode.

Le second collecteur de courant 7 recouvre totalement la seconde électrode 6.

Dans le cas d'un collecteur de courant recouvrant partiellement la seconde électrode, la partie non couverte peut ne pas participer aux échanges ioniques, ce qui peut amener à des défaillances. Un recouvrement total de la seconde électrode par le collecteur de courant permet d'éviter ces défaillances et d'augmenter les performances et/ou la durée de vie du dispositif.

Le second collecteur de courant 7 et la seconde électrode 6 sont isolés électriquement du premier collecteur de courant 3 et de la première électrode 4. Le dispositif comporte des premiers et des seconds moyens de connexions électriques, aussi appelés connecteurs électriquement conducteurs ou éléments de connexion électrique 9, reliés respectivement au premier collecteur de courant 3 et au second collecteur de courant 7. Les premiers et seconds moyens de connexions électriques sont isolés entre eux. Ils forment des contacts d'électrode.

Le premier collecteur de courant 3 étant encapsulé par la couche d'électrolyte 5 et la seconde électrode 6, il n'est pas possible de faire transiter du courant comme dans les architectures conventionnelles.

Le premier collecteur de courant 3 comporte des éléments de connexion électrique 9 relient électriquement le premier collecteur de courant 3 à une prise de contact déportée ou à une prise de contact localisée sur la seconde face du substrat.

Selon un premier mode de réalisation, les premiers et/ou seconds moyens de connexion électrique peuvent comporter des vias conducteurs traversant le substrat et reliant électriquement respectivement le premier et le second collecteurs de courant au niveau de la seconde face du substrat.

Par exemple, comme représenté aux figures 4 et 7, il est particulièrement avantageux de prévoir que le premier collecteur de courant 3 comporte un connecteur électriquement conducteur 9 traversant le substrat pour former un contact d'électrode.
Le connecteur électriquement conducteur 9 traverse le substrat de manière à autoriser une prise de contact sur la face opposée à la face comportant les première et deuxième électrodes et la couche d'électrolyte, i.e. depuis la première face vers la seconde face.
Dans cette architecture, le contact d'électrode est déporté ce qui permet de conserver un dispositif électrochimique compact et ayant un bonne tenue au cyclage.

Dans cette configuration, il est également avantageux de réaliser la prise de contact du second collecteur de courant 7 par un autre connecteur électriquement conducteur 9 qui traverse également le substrat, i.e. depuis la première face vers la seconde face. De cette manière, tous les contacts sont disposés sur une même face du substrat. En variante, le contact de premier collecteur de courant 3 est sur une face du substrat et le contact de second collecteur de courant 7 est sur la face opposée.

Par traverse, on entend que les connecteurs électriquement conducteurs 9 vont de la première face du substrat à la seconde face du substrat. La seconde face peut comporter tout dispositif adapté pour collecter les charges électriques.
Les connecteurs électriquement conducteurs peuvent être connectiques par vias. Ce sont des connections perpendiculaires aux première et deuxième faces et passant à travers le substrat.

Dans le cas d'un substrat en silicium, il est avantageux de disposer un matériau électriquement isolant entre le connecteur 9 et le substrat 2 pour éviter tout court-circuit.

Selon un autre mode de réalisation, les premiers et/ou les seconds moyens de connexions électriques peuvent comporter au moins une liaison électrique enterrée dans le substrat avec une reprise de contact sur la première face du substrat, i.e. sur la face du substrat comportant l'empilement.

Par exemple, comme illustré à la figure 8, le connecteur électriquement conducteur 9 est formé par une piste conductrice qui chemine à l'intérieur du substrat, avantageusement à l'intérieur de la couche électriquement isolante. La piste conductrice débouche sur la première face pour former le contact de premier collecteur de manière déportée. Le connecteur électrique 9 chemine à l'intérieur du substrat pour déboucher sur la même face, c'est-à-dire la face qui comporte les première et deuxième électrodes.
Cette configuration permet une meilleure protection du collecteur de courant lors d'étapes technologiques nécessaires à la formation de l'empilement, telle qu'une attaque chimique, par exemple. Le dépôt des couches actives sur un substrat, ne présentant pas de topographie à l'état initial, permet, avantageusement, d'éviter les passages de marche au niveau du collecteur de courant.

Le premier collecteur de courant 3 et le connecteur électrique 9 peuvent former un seul et même élément dans cette configuration.

Selon un autre mode de réalisation, les seconds moyens de connexions électriques comportent au moins une reprise de contact électrique du second collecteur de courant, disposée sur le substrat, cette reprise de contact étant formée par une extrémité de la couche mince formant le collecteur.

Comme représenté à la figure 9, une couche de matériau diélectrique 8 peut être disposée de façon à séparer la seconde électrode 6 et le second collecteur de courant 7 du premier collecteur de courant 3. Avantageusement, la couche de matériau diélectrique 8 permet également de séparer la couche d'électrolyte 5 du premier collecteur de courant 3.

L'homme du métier pourra combiner différents modes de réalisation les uns avec les autres.

Selon un mode de réalisation préférentiel, le dispositif 1 est une microbatterie. La première électrode 4 correspond à l'électrode négative ou à l'électrode positive de la batterie. La seconde électrode 6 correspond à l'autre électrode. Préférentiellement, la première électrode 4 est l'électrode positive, i.e. la cathode, et la seconde électrode est l'électrode négative, i.e. l'anode.

Différentes structures de microbatterie peuvent être réalisées :
- une microbatterie dite lithium métal ; dans ce cas l'anode, correspondant à la seconde électrode 6, est en lithium,
- une microbatterie de type lithium ion ; dans ce cas l'anode est un matériau d'insertion, d'alliage ou de conversion du lithium,
La réalisation d'une batterie lithium-free peut également être envisagée. Dans ce cas, il n'y a pas d'anode. La seconde électrode n'est pas déposée avant le second collecteur de courant 7 qui est alors déposé directement sur l'électrolyte 5. Le lithium s'électrodépose directement à la surface du second collecteur de courant 7 en mode charge pour former la seconde électrode 6 et est dissout en mode décharge.

Préférentiellement, le dispositif est une microbatterie lithium-ion et la seconde électrode 6 est une anode élaborée en matériau d'insertion ou de conversion du lithium du lithium, ou un alliage du lithium.

Selon un autre mode de réalisation préférentiel, le dispositif électrochimique 1 est un système électrochrome.
Le système électrochrome "tout solide" se présente sous forme d'un empilement de couches minces solides sur un substrat 2. En particulier, le dispositif électrochrome comporte, successivement à partir du substrat 2, une contre-électrode 4, un électrolyte conducteur ionique 5, une électrode active électrochrome 6.

L'électrode active électrochromique est formée d'un matériau électrochrome en mesure d'insérer, réversiblement et simultanément, des ions et des électrons. Sous l'effet d'une différence de potentiel appliquée entre l'électrode active et la contre-électrode, les ions s'insèrent dans le matériau électrochrome de l'électrode active pour donner une coloration persistante de l'état d'oxydation correspondant. En appliquant une polarisation inverse, les ions se désinsèrent de l'électrode active qui revient à son état d'oxydation initial, coloré ou transparent.

Les états d'oxydation du matériau électrochrome correspondent, par conséquent, aux états insérés et désinsérés et sont d'une coloration distincte lorsqu'ils sont soumis à une alimentation électrique appropriée.
Avant l'application de la différence de potentiel, la couleur affichée est celle du substrat, obtenue par transmittance à travers l'empilement. Après application d'une différence de potentiel entre l'électrode active et la contre-électrode, un affichage d'une couleur différente correspondant à celui du matériau électrochrome de l'électrode active est obtenu.

La seconde électrode 6 et/ou la première électrode 4 est une électrode en oxyde de tungstène, en oxyde d'iridium, en oxyde de vanadium ou en oxyde de molybdène.

La seconde électrode 6 est, préférentiellement, en oxyde de tungstène, ou en oxyde de molybdène.

La couche solide d'électrolyte conducteur ionique est à base de lithium, par exemple, en nitrure de lithium (Li₃N), LiPON, LiSiPON, ou encore en LiBON etc...

L'ion spécifique est, avantageusement, l'ion lithium Li⁺. L'ion Li⁺ présente une mobilité supérieure aux autres ions comme le sodium ou l'argent du fait de la petite taille de l'ion lithium, diminuant le temps de réponse du système électrochrome.

La contre-électrode, par exemple la première électrode 4, est par exemple, en oxyde d'iridium, en oxyde de vanadium.

Le système peut également comprendre un revêtement protecteur à base de résine acrylique ou d'époxy.

Avantageusement, comme l'électrode active électrochrome 6 recouvre totalement la couche d'électrolyte 5, il n'y a, pas besoin de déposer, une couche isolante sur la couche d'électrolyte 5 afin de la protéger.

Un circuit d'alimentation externe peut permettre de contrebalancer les charges et d'assurer l'électroneutralité du dispositif d'affichage électrochrome.

Le dispositif est adapté pour être utilisé pour l'affichage d'informations statiques, par exemple, pour des applications dans le domaine de la publicité.

Le système électrochrome présente une forte mobilité des ions Li⁺, le système est fiable et performant. La mise en oeuvre de ce système électrochrome est simple, industrialisable et adaptée aux systèmes d'affichage à grande surface.

Le procédé pour réaliser le dispositif électrochimique 1 comporte les étapes successives suivantes :
- fournir un substrat 2 recouvert par un premier collecteur de courant 3,
- former une première électrode 4 sur le premier collecteur de courant 3, la première électrode 4 définissant un motif ayant une face inférieure, une face supérieure et des parois latérales, la face inférieure du motif recouvrant au moins une partie du premier collecteur de courant 3,
- former une couche d'électrolyte 5 sur la première électrode 4, la couche d'électrolyte 5 étant configurée pour recouvrir au moins la face supérieure et au moins une partie des parois latérales du motif de la première électrode 4,
- former une seconde électrode 6 recouvrant totalement la couche d'électrolyte 5, l'épaisseur de la couche d'électrolyte 5 disposée entre les parois latérales du motif de la première électrode 4 et la seconde électrode 6 étant sensiblement égale autour dudit motif à 20% près,
- former un deuxième collecteur de courant 7 recouvrant totalement la seconde électrode 6, le second collecteur de courant 7 et la seconde électrode 6 étant isolés électriquement du premier collecteur de courant 3 et de la première électrode 4,
- former des premiers et des seconds moyens de connexions électriques, reliés respectivement au premier collecteur de courant et au second collecteur de courant, et isolés entre eux.

Plus particulièrement, une microbatterie 1 peut être réalisée avec le procédé comportant les étapes successives suivantes :
- fournir un substrat 2, par exemple, un substrat de silicium
- réaliser les connecteurs électriques 9 (vias) dans le substrat, par des procédés se basant sur la réalisation d'un masque de gravure, la gravure du substrat au travers du masque de gravure par exemple par gravure ionique réactive profonde (ou DRIE pour « Deep Reactive Ion Etching » en anglais), et le dépôt d'un matériau électriquement isolant puis d'un matériau électriquement conducteur pour remplir le trou de gravure
- former le premier collecteur de courant 3 :
   - déposer un bicouche Ti/Pt de 20nm/100nm d'épaisseur, respectivement,
   - structurer le bicouche, par une formation d'un masque de gravure, suivie d'une gravure humide, dans deux solutions aqueuses successives « aqua reggia » (pour Pt) et NH₄OH/H₂O₂/H₂O (pour Ti),
- former la première électrode 4 :
   - déposer une couche de LiCoO₂ de 10*µ*m d'épaisseur,
   - structurer ladite couche, par une étape de formation d'un masque de gravure, suivie d'une gravure humide, dans une solution aqueuse contenant de l'acide sulfurique H₂SO₄,
- former la couche d'électrolyte 5 :
   - déposer une couche en LiPON (pour « lithium phosphorus oxynitride ») de 1.5*µ*m d'épaisseur,
   - structurer la couche de LIPON par une étape de formation d'un masque de gravure, suivie d'une gravure humide, dans une solution aqueuse contenant du peroxyde d'hydrogène H₂O₂,
- former la seconde électrode 6 :
   - déposer une couche de silicium de 100 nm d'épaisseur,
   - structurer la couche de silicium, par une étape de formation d'un masque de gravure, suivie d'une gravure humide, dans une solution aqueuse contenant du KOH,
- former le deuxième collecteur de courant 7 :
   - déposer une couche de Cu de 1*µ*m d'épaisseur,
   - structurer ladite couche, par une étape de formation d'un masque de gravure, suivie d'une gravure humide, dans une solution aqueuse contenant du NH₄OH.

Les dépôts du premier collecteur de courant 3, de la première électrode 4, de la couche mince d'électrolyte 5, de la seconde électrode 6 et du second collecteur de courant 7 sont réalisés avantageusement par dépôt physique en phase vapeur (ou PVD pour « physical vapor déposition » en anglais) et, plus particulièrement, par pulvérisation cathodique.

Le premier collecteur de courant 3, la première électrode 4, la couche d'électrolyte 5, la seconde électrode 6 et le second collecteur de courant 7 peuvent également être structurés par une étape de photolithographie suivie par au moins une étape de gravure humide : le procédé est, avantageusement, facilement industrialisable.

Le dispositif électrochimique obtenu présente un flux ionique, entre la première électrode et la seconde électrode, en tout point de la première électrode.
La surface active du dispositif est augmentée.
L'architecture du dispositif électrochimique permet un échange ionique très uniforme au niveau des deux électrodes, ce qui améliore les propriétés électrochimiques de la microbatterie en cours de cyclage.
De plus, l'uniformité de flux permet de réduire considérablement, voire de supprimer, les contraintes mécaniques au niveau de la première électrode, par rapport à une structure classique.
Le dispositif électrochimique ne présente pas de dégradation morphologique (perte d'adhérence, rupture de contact électronique, ou délamination de l'empilement complet). Les performances électrochimiques ne sont pas dégradées au fur et à mesure du cyclage.

## Revendications

1. Dispositif électrochimique (1), tel qu'une microbatterie ou un système électrochrome, comportant un empilement de couches minces solides formées sur un substrat (2), ledit empilement comprenant successivement:
- un premier collecteur de courant (3) recouvrant une partie du substrat (2),
- une première électrode (4) définissant un motif ayant une face inférieure, une face supérieure et des parois latérales, la face inférieure du motif recouvrant au moins une partie du premier collecteur de courant (3),
- une couche d'électrolyte (5) configurée pour recouvrir au moins la face supérieure et au moins une partie des parois latérales du motif de la première électrode (4),
- une seconde électrode (6) recouvrant totalement la couche d'électrolyte (5), l'épaisseur de la couche d'électrolyte (5) disposée entre les parois latérales du motif de la première électrode (4) et la seconde électrode (6) étant sensiblement égale autour dudit motif à 20% près, **caractérisé en ce que**, - un second collecteur de courant (7) recouvre totalement la seconde électrode (6), le second collecteur de courant (7) et la seconde électrode (6) étant isolés électriquement du premier collecteur de courant (3) et de la première électrode (4),
ledit dispositif comportant des premiers et des seconds moyens de connexions électriques reliés respectivement au premier collecteur de courant (3) et au second collecteur de courant (7), et isolés entre eux.

2. Dispositif (1) selon la revendication 1, **caractérisé en ce que** la couverture des parois du premier motif, par la couche d'électrolyte (5), est symétrique tout autour du motif.

3. Dispositif (1) selon l'une des revendications 1 et 2, **caractérisé en ce que** la couche d'électrolyte (5) et le premier collecteur de courant (3) encapsulent totalement le motif de la première électrode (4), la couche d'électrolyte (5) étant en contact avec le premier collecteur de courant (3) et étant configurée pour isoler électriquement ledit premier collecteur (3) de la seconde électrode (6).

4. Dispositif (1) selon l'une quelconque des revendications 1 à 3, **caractérisé en ce que** les premiers et/ou les seconds moyens de connexions électriques comportent des vias conducteurs traversant le substrat (2).

5. Dispositif (1) selon l'une quelconque des revendications 1 à 3, **caractérisé en ce que** les premiers moyens de connexions électriques comportent au moins une liaison électrique enterrée dans le substrat (2).

6. Dispositif (1) selon l'une quelconque des revendications 1 à 3, **caractérisé en ce que** les seconds moyens de connexions électriques comportent au moins une reprise de contact électrique du second collecteur de courant (7), disposée sur le substrat (2), cette reprise de contact étant formée par une extrémité de la couche mince formant le collecteur.

7. Dispositif (1) selon l'une quelconque des revendications 1 à 6, **caractérisé en ce que** le motif d'électrode est un cylindre, un cube ou un pavé.

8. Dispositif (1) selon l'une quelconque des revendications 1 à 7, **caractérisé en ce que** le dispositif (1) est une microbatterie lithium-métal et **en ce que** la seconde électrode (6) est une anode en lithium.

9. Dispositif (1) selon l'une quelconque des revendications 1 à 7, **caractérisé en ce que** le dispositif (1) est une microbatterie lithium-ion et **en ce que** la seconde électrode (6) est une anode élaborée en matériau d'insertion ou de conversion du lithium, ou un alliage du lithium.

10. Dispositif (1) selon l'une quelconque des revendications 1 à 7, **caractérisé en ce que** le dispositif (1) est un système électrochrome et **en ce que** la seconde électrode (6) et/ou la première électrode (4) est une électrode en oxyde de tungstène, en oxyde d'iridium, en oxyde de vanadium ou en oxyde de molybdène.

11. Procédé de réalisation d'un dispositif électrochimique (1) selon l'une quelconque des revendications 1 à 10, **caractérisé en ce que** le procédé comporte les étapes successives suivantes :
- fournir un substrat (2) recouvert par un premier collecteur de courant (3),
- former une première électrode (4) sur le premier collecteur de courant (3), la première électrode (4) définissant un motif ayant une face inférieure, une face supérieure et des parois latérales, la face inférieure du motif recouvrant au moins une partie du premier collecteur de courant (3),
- former une couche d'électrolyte (5) sur la première électrode (4), la couche d'électrolyte (5) étant configurée pour recouvrir au moins la face supérieure et au moins une partie des parois latérales du motif de la première électrode (4),
- former une seconde électrode (6) recouvrant totalement la couche d'électrolyte (5), l'épaisseur de la couche d'électrolyte (5) disposée entre les parois latérales du motif de la première électrode (4) et la seconde électrode (6) étant sensiblement égale autour dudit motif à 20% près,
- former un deuxième collecteur de courant (7) recouvrant totalement la seconde électrode (6), le second collecteur de courant (7) et la seconde électrode (6) étant isolés électriquement du premier collecteur de courant (3) et de la première électrode (4),
- former des premiers et des seconds moyens de connexions électriques, reliés respectivement au premier collecteur de courant et au second collecteur de courant, et isolés entre eux.

12. Procédé selon la revendication 11, **caractérisé en ce que** le premier collecteur de courant (3), la première électrode (4), la couche d'électrolyte (5), la seconde électrode (6) et le second collecteur de courant (7) sont déposés par dépôt physique en phase vapeur.

13. Procédé selon l'une des revendications 11 et 12, **caractérisé en ce que** le premier collecteur de courant (3), la première électrode (4), la couche d'électrolyte (5), la seconde électrode (6) et le second collecteur de courant (7) sont structurés par une étape de formation d'un masque de gravure suivie par au moins une étape de gravure.

## Patentansprüche

1. Elektrochemische Vorrichtung (1), wie eine Mikrobatterie oder ein elektrochromes System, umfassend einen Stapel aus festen dünnen Schichten, die auf einem Substrat (2) gebildet sind, wobei der Stapel nacheinander umfasst:
- einen ersten Stromkollektor (3), der einen Teil des Substrats (2) bedeckt,
- eine erste Elektrode (4), die ein Muster mit einer Unterseite, einer Oberseite und Seitenwänden definiert, wobei die Unterseite des Musters wenigstens einen Teil des ersten Stromkollektors (3) bedeckt,
- eine Elektrolytschicht (5), die dazu ausgelegt ist, wenigstens die Oberseite und wenigstens einen Teil der Seitenwände des Musters der ersten Elektrode (4) zu bedecken,
- eine zweite Elektrode (6), welche die Elektrolytschicht (5) vollständig bedeckt, wobei die Dicke der Elektrolytschicht (5), die zwischen den Seitenwänden des Musters der ersten Elektrode (4) und der zweiten Elektrode (6) angeordnet ist, um das Muster herum bis auf 20 % im Wesentlichen gleich ist,
**dadurch gekennzeichnet, dass**
- ein zweiter Stromkollektor (7) die zweite Elektrode (6) vollständig bedeckt, wobei der zweite Stromkollektor (7) und die zweite Elektrode (6) von dem ersten Stromkollektor (3) und von der ersten Elektrode (4) elektrisch isoliert sind,
wobei die Vorrichtung erste und zweite elektrische Verbindungsmittel umfasst, die mit dem ersten Stromkollektor (3) bzw. mit dem zweiten Stromkollektor (7) verbunden und untereinander isoliert sind.

2. Vorrichtung (1) nach Anspruch 1, **dadurch gekennzeichnet, dass** die Abdeckung der Wände des ersten Musters durch die Elektrolytschicht (5) rundherum um das Muster symmetrisch ist.

3. Vorrichtung (1) nach einem der Ansprüche 1 und 2, **dadurch gekennzeichnet, dass** die Elektrolytschicht (5) und der erste Stromkollektor (3) das Muster der ersten Elektrode (4) vollständig einkapseln, wobei die Elektrolytschicht (5) mit dem ersten Stromkollektor (3) in Kontakt ist und dazu ausgelegt ist, den ersten Kollektor (3) von der zweiten Elektrode (6) elektrisch zu isolieren.

4. Vorrichtung (1) nach einem der Ansprüche 1 bis 3, **dadurch gekennzeichnet, dass** die ersten und/oder die zweiten elektrischen Verbindungsmittel das Substrat (2) durchquerende leitende Vias umfassen.

5. Vorrichtung (1) nach einem der Ansprüche 1 bis 3, **dadurch gekennzeichnet, dass** die ersten elektrischen Verbindungsmittel wenigstens eine in das Substrat (2) eingelassene elektrische Verbindung umfassen.

6. Vorrichtung (1) nach einem der Ansprüche 1 bis 3, **dadurch gekennzeichnet, dass** die zweiten elektrischen Verbindungsmittel wenigstens eine elektrische Kontaktierung des zweiten Stromkollektors (7), welche auf dem Substrat (2) angeordnet ist, umfassen, wobei diese Kontaktierung durch ein Ende der den Kollektor bildenden dünnen Schicht gebildet ist.

7. Vorrichtung (1) nach einem der Ansprüche 1 bis 6, **dadurch gekennzeichnet, dass** das Elektrodenmuster ein Zylinder, ein Würfel oder ein Block ist.

8. Vorrichtung (1) nach einem der Ansprüche 1 bis 7, **dadurch gekennzeichnet, dass** die Vorrichtung (1) eine Lithium-Metall-Mikrobatterie ist und dass die zweite Elektrode (6) eine Lithium-Anode ist.

9. Vorrichtung (1) nach einem der Ansprüche 1 bis 7, **dadurch gekennzeichnet, dass** die Vorrichtung (1) eine Lithium-Ionen-Mikrobatterie ist und dass die zweite Elektrode (6) eine Anode hergestellt aus Lithium-Einlagerungs- oder - Umwandlungsmaterial oder einer Legierung von Lithium ist.

10. Vorrichtung (1) nach einem der Ansprüche 1 bis 7, **dadurch gekennzeichnet, dass** die Vorrichtung (1) ein elektrochromes System ist und dass die zweite Elektrode (6) und/oder die erste Elektrode (4) eine Elektrode aus Wolframoxid, aus Iridiumoxid, aus Vanadiumoxid oder aus Molybdänoxid ist.

11. Verfahren zur Herstellung einer elektrochemischen Vorrichtung (1) nach einem der Ansprüche 1 bis 10, **dadurch gekennzeichnet, dass** das Verfahren die folgenden aufeinanderfolgenden Schritte umfasst:
- Bereitstellen eines Substrats (2), das von einem ersten Stromkollektor (3) bedeckt ist,
- Ausbilden einer ersten Elektrode (4) auf dem ersten Stromkollektor (3), wobei die erste Elektrode (4) ein Muster mit einer Unterseite, einer Oberseite und Seitenwänden definiert, wobei die Unterseite des Musters wenigstens einen Teil des ersten Stromkollektors (3) bedeckt,
- Ausbilden einer Elektrolytschicht (5) auf der ersten Elektrode (4), wobei die Elektrolytschicht (5) dazu ausgelegt ist, wenigstens die Oberseite und wenigstens einen Teil der Seitenwände des Musters der ersten Elektrode (4) zu bedecken,
- Ausbilden einer zweiten Elektrode (6), welche die Elektrolytschicht (5) vollständig bedeckt, wobei die Dicke der Elektrolytschicht (5), die zwischen den Seitenwänden des Musters der ersten Elektrode (4) und der zweiten Elektrode (6) angeordnet ist, um das Muster herum bis auf 20 % im Wesentlichen gleich ist,
- Ausbilden eines zweiten Stromkollektors (7), welcher die zweite Elektrode (6) vollständig bedeckt, wobei der zweite Stromkollektor (7) und die zweite Elektrode (6) von dem ersten Stromkollektor (3) und von der ersten Elektrode (4) elektrisch isoliert sind,
- Ausbilden von ersten und zweiten elektrischen Verbindungsmitteln, die mit dem ersten Stromkollektor bzw. mit dem zweiten Stromkollektor verbunden und untereinander isoliert sind.

12. Verfahren nach Anspruch 11, **dadurch gekennzeichnet, dass** der erste Stromkollektor (3), die erste Elektrode (4), die Elektrolytschicht (5), die zweite Elektrode (6) und der zweite Stromkollektor (7) durch physikalische Gasphasenabscheidung abgeschieden werden.

13. Verfahren nach einem der Ansprüche 11 und 12, **dadurch gekennzeichnet, dass** der erste Stromkollektor (3), die erste Elektrode (4), die Elektrolytschicht (5), die zweite Elektrode (6) und der zweite Stromkollektor (7) durch einen Schritt zum Ausbilden einer Ätzmaske, an den sich wenigstens ein Ätzschritt anschließt, strukturiert werden.

## Claims

1. An electrochemical device (1), such as a microbattery or an electrochromic system, comprising a stack of solid thin layers formed on a substrate (2), said stack successively comprising:
- a first current collector (3) covering a part of the substrate (2),
- a first electrode (4) defining a pattern having a bottom surface, a top surface and side walls, the bottom surface of the pattern covering at least a part of the first current collector (3),
- an electrolyte layer (5) configured to cover at least the top surface and at least a part of the side walls of the pattern of the first electrode (4),
- a second electrode (6) totally covering the electrolyte layer (5), the thickness of the electrolyte layer (5) arranged between the side walls of the pattern of the first electrode (4) and the second electrode (6) being substantially equal around said pattern to within 20%,
**characterized in that**
- a second current collector (7) totally covers the second electrode (6), the second current collector (7) and the second electrode (6) being electrically insulated from the first current collector (3) and from the first electrode (4),
said device comprising first and second electric connection means respectively connected to the first current collector (3) and to the second current collector (7) and insulated from one another.

2. The device (1) according to claim 1, **characterized in that** the covering of the side walls of the first pattern, by the electrolyte layer (5), is symmetrical all around the pattern.

3. The device (1) according to one of claims 1 and 2, **characterized in that** the electrolyte layer (5) and the first current collector (3) totally encapsulate the pattern of the first electrode (4), the electrolyte layer (5) being in contact with the first current collector (3) and being configured to electrically insulate said first current collector (3) from the second electrode (6).

4. The device (1) according to any one of claims 1 to 3, **characterized in that** the first and/or second electric connection means comprise conducting vias passing through the substrate (2).

5. The device (1) according to any one of claims 1 to 3, **characterized in that** the first electric connection means comprise at least one electric connection buried in the substrate (2).

6. The device (1) according to any one of claims 1 to 3, **characterized in that** the second electric connection means comprise at least one electric contact connection of the second current collector (7), arranged on the substrate (2), this contact connection being formed by one end of the thin layer forming the collector.

7. The device (1) according to any one of claims 1 to 6, **characterized in that** the electrode pattern is a cylinder, a cube or a slab.

8. The device (1) according to any one of claims 1 to 7, **characterized in that** the device (1) is a lithium-metal microbattery and **in that** the second electrode (6) is a lithium anode.

9. The device (1) according to any one of claims 1 to 7, **characterized in that** the device (1) is a lithium-ion microbattery and **in that** the second electrode (6) is an anode made from lithium insertion or conversion material, or a lithium alloy.

10. The device (1) according to any one of claims 1 to 7, **characterized in that** the device (1) is an electrochromic system and **in that** the second electrode (6) and/or the first electrode (4) is an electrode made from tungsten oxide, iridium oxide, vanadium oxide or molybdenum oxide.

11. A fabrication method of an electrochemical device (1) according to any one of claims 1 to 10, **characterized in that** the method comprises the following successive steps:
- providing a substrate (2) covered by a first current collector (3),
- forming a first electrode (4) on the first current collector (3), the first electrode (4) defining a pattern having a bottom surface, a top surface and side walls, the bottom surface of the pattern covering at least a part of the first current collector (3),
- forming an electrolyte layer (5) on the first electrode (4), the electrolyte layer (5) being configured to cover at least the top surface and at least a part of the side walls of the pattern of the first electrode (4),
- forming a second electrode (6) totally covering the electrolyte layer (5), the thickness of the electrolyte layer (5) arranged between the side walls of the pattern of the first electrode (4) and the second electrode (6) being substantially equal around said pattern to within 20%,
- forming a second current collector (7) totally covering the second electrode (6), the second current collector (7) and second electrode (6) being electrically insulated from the first current collector (3) and from the first electrode (4),
- forming first and second electric connection means respectively connected to the first and second current collectors and insulated from one another.

12. The method according to claim 11, **characterized in that** the first current collector (3), the first electrode (4), the electrolyte layer (5), the second electrode (6) and the second current collector (7) are deposited by physical vapor deposition.

13. The method according to one of claims 11 and 12, **characterized in that** the first current collector (3), the first electrode (4), the electrolyte layer (5), the second electrode (6) and second current collector (7) are patterned by a formation step of an etching mask followed by at least one etching step.
